# EUROPÄISCHE PATENTANMELDUNG

(11) **EP 2 466 730 A1**
(43) Veröffentlichungstag der Anmeldung: **20.06.2012**
(21) Anmeldenummer: 10195844.5
(22) Anmeldetag: 20.12.2010
(51) Int. Cl.: H02K 7/10, H02K 11/00, H02K 16/04, H02K 1/14

(54) **Getriebeloser Rollenantrieb**

(71) Anmelder: CYORIS AG, 3600 Thun (CH)
(72) Erfinder: Bütschi, Thomas, 3647, Reutigen (CH); Kunz, Beat, 3706, Leissigen (CH); Erni, Michel, 3652, Hilterfingen (CH)
(74) Vertreter: AMMANN PATENTANWÄLTE AG BERN

(57) **Zusammenfassung**

Ein getriebeloser Rollenantrieb (1) ist zum Einbau in eine hohlzylindrische Rolle (2) bestimmt, um diese drehend anzutreiben. Er weist einen Transversalflussmotor mit einem innenliegenden Stator mit einer Statorachse (10) und einem aussenliegenden Rotor (8, 18) mit in Umfangsrichtung hintereinander angeordneten Permanentmagneten (9) auf. Zudem umfasst der Rollenantrieb eine elektrische Steuereinheit (15), wobei der Transversalflussmotor und die Steuereinheit (15) axial hintereinander angeordnet sind. Ein solcher Rollenantrieb erfüllt hohe Anforderungen hinsichtlich der Leistung und der Lastzyklen und kann anschlussfertig geliefert werden.

## Beschreibung

Die Erfindung betrifft einen getriebelosen Rollenantrieb, der dazu bestimmt ist, in eine hohlzylindrische Rolle eingebaut zu werden, um diese drehend anzutreiben.

Rollenantriebe werden beispielsweise in Förderanlagen wie Förderbändern oder Rollenförderern, aber auch beispielsweise in Rollläden, Storen und dergleichen eingesetzt. Es sind Rollenantriebe mit Getrieben bekannt, die in hohlzylindrische Rollen eingebaut werden können. Solche Antriebe werden aber den Anforderungen an das Drehmoment und insbesondere den Drehzahlbereich nicht immer gerecht. Zudem erhöht das Getriebe die Produktions- und Unterhaltskosten wie auch das Risiko von Ausfällen. Schliesslich sind solche Antriebe schlecht für hohe Dauerleistungen geeignet und eine hohe Anzahl von Lastzyklen verkürzt die Lebensdauer des Getriebes.

Ausgehend von diesem Stand der Technik liegt der Erfindung die Aufgabe zugrunde, einen getriebelosen Rollenantrieb vorzuschlagen, der einfach und kostengünstig herstellbar und in einem weiten Drehmoment- und Drehzahlbereich mit einer hohen Dauerleistung und mit einer hohen Anzahl von Lastzyklen einsetzbar ist.

Diese Aufgabe wird erfindungsgemäss dadurch gelöst, dass der Rollenantrieb einen Transversalflussmotor mit einem innenliegenden Stator mit einer Statorachse und einem aussenliegenden Rotor mit in Umfangsrichtung hintereinander angeordneten Permanentmagneten umfasst, dass der Rollenantrieb eine elektrische Steuereinheit umfasst und dass der Transversalflussmotor und die Steuereinheit axial hintereinander angeordnet sind.

Der Einsatz eines Transversalflussmotors erlaubt aufgrund dessen prinzipiellen Aufbaus eine relativ hohe thermische Belastung und dadurch eine hohe Dauerleistung und eine hohe Anzahl von Lastzyklen pro Zeiteinheit. Durch die im Antrieb angeordnete Steuereinheit kann der Antrieb anschlussfertig geliefert werden. Ein weiterer Vorteil besteht darin, dass ein solcher Rollenantrieb ohne Drehmomentsensor regelbar ist, weil Transversalflussmotoren bei Belastungsänderungen eine grosse Stromänderung zeigen.

Nach einer Ausführungsart übersteigen die Abmessungen der Steuereinheit radial zur Statorachse den Rotordurchmesser nicht. Dies erlaubt es, auch die Steuereinheit vollständig in einer hohlzylindrischen Rolle unterzubringen.

Nach einer anderen Ausführungsart ist die Steuereinheit derart ausgebildet, dass sie als Abschlusselement in eine hohlzylindrische Rolle einsetzbar ist. Dabei kann ein Teil der Steuereinheit aus der Rolle herausragen und den Rotordurchmesser übersteigen.

Gemäss einer weiteren Ausführungsart weist die Steuereinheit eine axiale Öffnung auf, in welche die Statorachse hineinragt. Dadurch kann die Steuereinheit auf der Statorachse gehalten werden.

Nach einer zusätzlichen Ausführungsart durchdringt die Statorachse die Steuereinheit. Dadurch ist ein Rollenantrieb realisierbar, bei dem die Statorachse an beiden Enden der Rolle abgestützt werden kann.

Eine weitete Ausführungsart sieht vor, dass die Steuereinheit mit mindestens einem in einer zentralen Bohrung der Statorachse verlaufenden elektrischen Leiter verbunden ist. Dies erlaubt beispielsweise die Zufuhr elektrischer Energie wahlweise vom einen oder dem anderen Ende der Statorachse aus. Bei Rollenantrieben mit Getriebe können Leiter oftmals nur von einem Achsende zugeführt werden.

Nach einer anderen Ausführungsart ist die Steuereinheit mit mindestens einem in einer Längsnut der Statorachse verlaufenden elektrischen Anschlussleiter mindestens einer Statorspule verbunden. Diese Massnahme erlaubt einen kompakten Aufbau des Rollenantriebes.

Gemäss einer weiteren Ausführungsart ist der elektrische Anschlussleiter über eine Steckverbindung mit der Steuereinheit verbunden. Damit wird die Montage des Transversalflussmotors wesentlich vereinfacht.

Eine andere Ausführungsart sieht vor, dass der Stator und der Rotor zwei oder mehr axial hintereinander angeordnete Poleinheiten aufweisen. Die Poleinheiten werden im Fachgebiet auch als Phasen bezeichnet. Durch die so erreichte Modularität ist es möglich, einen Rollenantrieb sehr einfach durch Aneinanderreihen von Phasen an die Erfordernisse hinsichtlich Drehmoment und Drehzahlbereich anzupassen.

Nach einer weiteren Ausführungsart ist aussen auf dem Rotor mindestens ein radial federnder Toleranzring zur kraftschlüssigen Verbindung mit einer den Rotor umgebenden hohlzylindrischen Rolle angeordnet. Dies erleichtert die Montage des Antriebs in einer Rolle.

Wenn nach einer anderen Ausführungsart der Rollenantrieb mindestens ein Passstück für den stirnseitigen Abschluss einer hohlzylindrischen Rolle aufweist, wird dessen Montage weiter vereinfacht. Bevorzugt ist das Passstück mit Dichtmitteln ausgestattet, um den Rollenantrieb vor Schmutz und Flüssigkeit zu schützen. Besonders bevorzugt sind die Dichtmittel als Labyrinth-Dichtmittel ausgebildet. Solche Dichtungen sind im Betrieb verschleissfrei.

Schliesslich ist nach einer weiteren Ausführungsart vorgesehen, dass auf einer einzigen Statorachse oder koaxial miteinander verbundenen Statorachsen mindestens zwei Transversalflussmotoren hintereinander angeordnet sind. Dies erlaubt einerseits eine Vervielfachung der Antriebsleistung, wobei die einzelnen Transversalflussmotoren absolut synchron betrieben werden können. Andererseits ist es damit auch möglich, einzelne koaxial hintereinander angeordnete Rollenabschnitte mit unterschiedlichen Drehzahlen, Drehmomenten und/oder Drehrichtungen anzutreiben.

Ausführungsbeispiele der Erfindung werden nachstehend unter Bezugnahme auf die angefügten Zeichnungen beispielsweise näher beschrieben. Es zeigt
- Figur 1: einen perspektivischen Längsschnitt einer ersten Ausführungsart des Rollenantriebs,
- Figur 2: eine perspektivische Explosionsansicht einer zweiten Ausführungsart des Rollenantriebs,
- Figur 3: einen schematischen Längsschnitt des Stators,
- Figur 4: einen Querschnitt des Stators gemäss Figur 3,
- Figur 5: eine perspektivische Explosionsansicht eines Teils des Rotors, der Statorachse und einer Steuereinheit und
- Figur 6: eine Ausführungsart mit zwei Rollenantrieben auf einer gemeinsamen Statorachse.

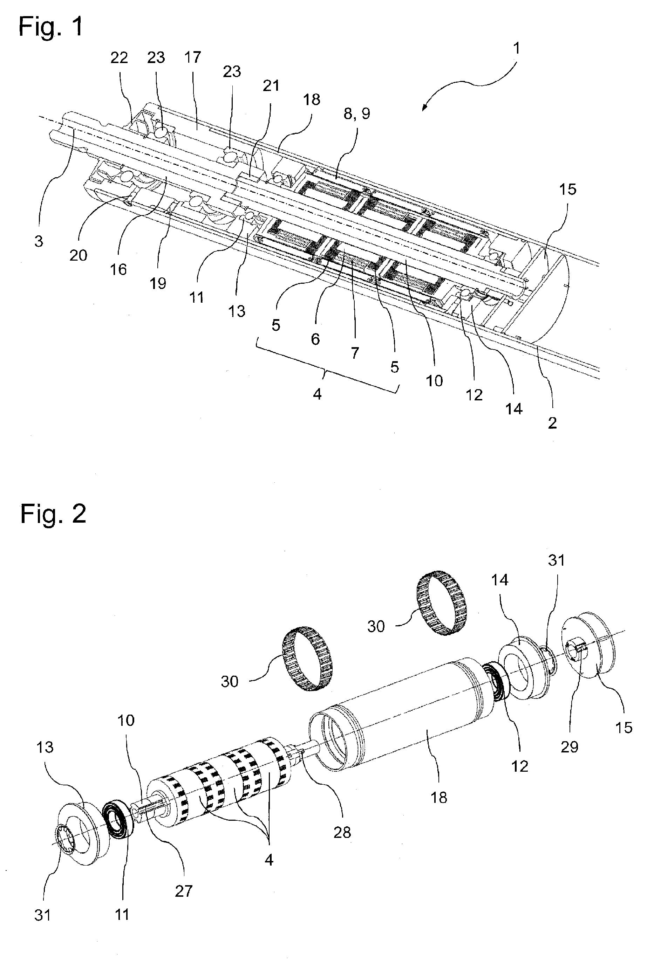

Figur 1 zeigt in einem perspektivisch dargestellten Längsschnitt einen Abschnitt einer hohlzylindrischen Rolle 2 mit einem darin angeordneten Rollenantrieb 1. Mit 3 ist die Längsachse des Rollenantriebs 1 bezeichnet. Ein Transversalflussmotor enthält im Beispiel drei Stator-Poleinheiten 4, die auf einer Statorachse 10 angeordnet sind. Jede Stator-Poleinheit 4 enthält zwei zahnscheiben 5, ein diese verbindendes Flussrohr 6 und eine das Flussrohr 6 umgebende Spule 7. Jeweils ein Zahn eines Paars von Zahnscheiben 5 bildet mit einem Abschnitt des dazwischenliegenden Flussrohrs 6 ein U-förmiges Joch. Jede Stator-Poleinheit 4 ist von einer Rotor-Poleinheit 8 umgeben, die aus in Umfangsrichtung hintereinander angeordneten Permanentmagneten 9 besteht. Die drei Rotor-Poleinheiten 8 sind von einem Mantelrohr 18 umgeben, welches beiderseits der Stator- und Rotor-Poleinheiten 4, 8 über Wälzlager 11, 12 auf der Statorachse 10 rotierbar getragen ist. Zur Überbrückung einer Durchmesserdifferenz zwischen dem Aussendurchmesser der Wälzlager 11, 12 und dem Innendurchmesser des Mantelrohrs 18 können Lagerübergangsringe 13, 14 vorgesehen sein. Im Beispiel bilden die drei in Richtung der Längsachse 3 hintereinander angeordneten, durch das Mantelrohr 18 umfassten Rotor-Poleinheiten 8 den Rotor des Transversalflussmotors.

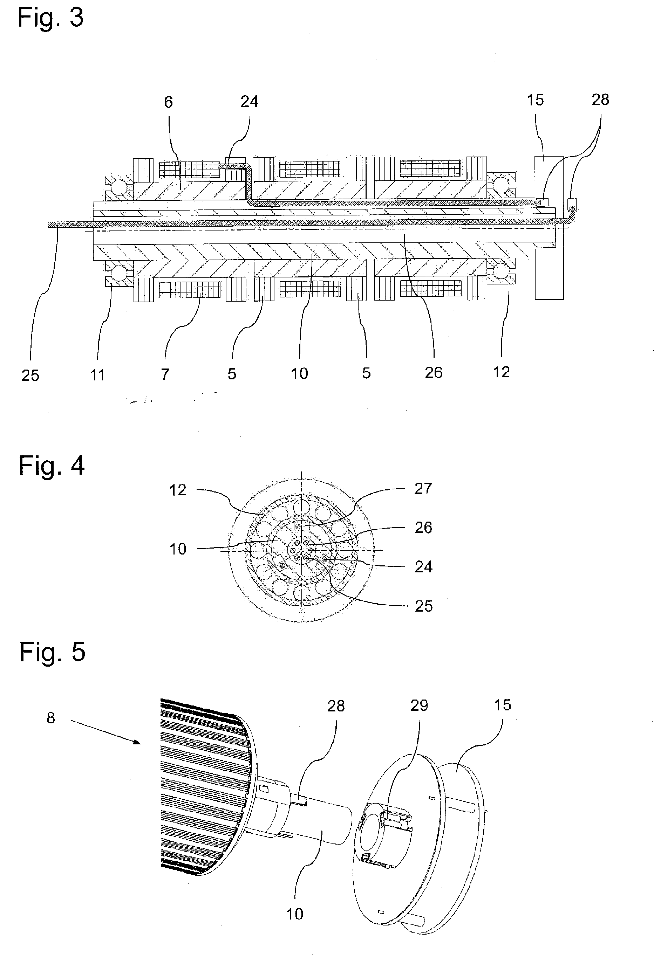

In Figur 1 rechts von den Stator- und Rotor-Poleinheiten 4, 8 ist eine Steuereinheit 15 auf der Statorachse 10 angeordnet. Die Steuereinheit 15 umfasst insbesondere einen Frequenzwandler, um den Transversalflussmotor entsprechend seiner Polzahl mit gewünschten Drehzahlen betreiben zu können. Die elektrischen Verbindungen der Steuereinheit 15 werden weiter unten anhand der Figuren 3 bis 5 erläutert. Anders als in Figur 1 dargestellt, kann die Steuereinheit 15 eine zentrale Öffnung aufweisen, sodass die Statorachse 10 die Steuereinheit 15 vollständig durchdringen und beidseitig aus der Rolle 2 herausragen kann. Links von den Stator- und Rotor-Poleinheiten 4, 8 ist eine Kupplungsachse 16 mittels einer Kupplung 21 mit der Statorachse 10 verbunden. Eine Einpresshülse 17 verbindet das Mantelrohr 18 mit der Rolle 2 und ist durch zwei Wälzlager 23 drehbar auf der Kupplungsachse 16 abgestützt. Die Drehmomentübertragung vom Rotor auf die Rolle 2 erfolgt primär durch Reibschluss. Zusätzlich kann, wie in Figur 1 gezeigt, die Einpresshülse 17 durch mindestens eine Schraube 19 am Mantelrohr 18 und durch mindestens eine weitere Schraube 20 an der Rolle 2 gesichert sein. Links in der Figur 1 ist die Einpresshülse 17 durch einen Abschlussdeckel 22 verschlossen, der eine Labyrinthdichtung beinhaltet. Dieser Aufbau erlaubt nicht nur die Ausführung des Transversalflussmotors mit nahezu beliebig vielen Poleinheiten bzw. Phasen, sondern auch die Anordnung mehrerer Transversalflussmotoren in einer Rolle.

Figur 2 zeigt in einer perspektivischen Explosionsansicht eine weitere Ausführungsart eines getriebelosen Rollenantriebes gemäss der Erfindung. Links in der Figur ist ein Spannring 31 dargestellt, der zur axialen Sicherung des Wälzlagers 11 auf der Statorachse 10 dient. Ein Lagerübergangsring 13 dient zur Überbrückung der Durchmesserdifferenz zwischen dem Wälzlager 10 und dem Mantelrohr 18. Rechts vom Wälzlager 11 ist ein aus drei auf der Statorachse 10 angeordneten Stator-Poleinheiten 4 bestehender Stator zu erkennen. Die Statorachse 10 weist Längsnuten 27 auf, deren Funktion nachstehend im Zusammenhang mit den Figuren 3 bis 5 noch erläutert wird. Mit 28 ist ein Steckkontakt zur elektrischen Verbindung der Statorwicklungen mit der Steuereinheit 15 bezeichnet. Rechts vom Stator ist ein mit Permanentmagneten ausgestatteter Rotor dargestellt, von dem in der Figur nur das Mantelrohr 18 sichtbar ist. Zur kraftschlüssigen Verbindung des Rotors mit einer Rolle 2 (in Figur 2 nicht dargestellt) sind zwei Toleranzringe 30 vorgesehen. Rechts anschliessend sieht man ein weiteres Wälzlager 12, einen weiteren Lagerübergangsring 14 und einen weiteren Spannring 31. Wie bei der Ausführungsart nach Figur 1 ist auch in Figur 2 die Steuereinheit 15 mit einer zentralen Öffnung ausgestattet, sodass sie auf die Statorachse 10 gesteckt werden kann. An der Steuereinheit 15 sind Steckkupplungen 29 vorhanden, die mit den Steckkontakten 28 verbindbar sind.

Figur 3 zeigt einen vereinfachten Längsschnitt durch den Stator des Transversalflussmotors, wobei hier besonders deutlich zu erkennen ist, wie Leiter 25 für die Speisung und Steuerung durch eine zentrale Bohrung 26 in der Statorachse 10 zu der auf das in der Figur rechte Ende der Statorachse 10 aufgesteckten Steuereinheit 15 führen und dort mit den Steckkontakten 28 verbunden sind. Von der Steuereinheit 15 führen Anschlussleiter 24 zu den drei Spulen 7. Diese Anschlussleiter 24 sind durch die Längsnuten 27 geführt, wie dies nachstehend anhand der Figur 4 noch deutlicher wird. In beiden Endbereichen der Statorachse 10 sind die erwähnten Wälzlager 11, 12 angeordnet.

Figur 4 zeigt einen Querschnitt durch den Transversalflussmotor, wobei von innen nach aussen die durch die zentrale Bohrung 26 der Statorachse 10 geführten Leiter 25 und die in den Längsnuten 27 der Statorachse 10 angeordneten Anschlussleiter 24 zu erkennen sind.

In Figur 5 ist in einer perspektivischen Explosionsansicht das Ende der Statorachse 10 dargestellt, das rechts aus einer Rotor-Poleinheit 8 herausragt. Die Figur veranschaulicht, wie die Steuereinheit 15 auf die Statorachse 10 aufgeschoben und mithilfe der Steckkontakte 28 und Steckkupplungen 29 angeschlossen werden kann.

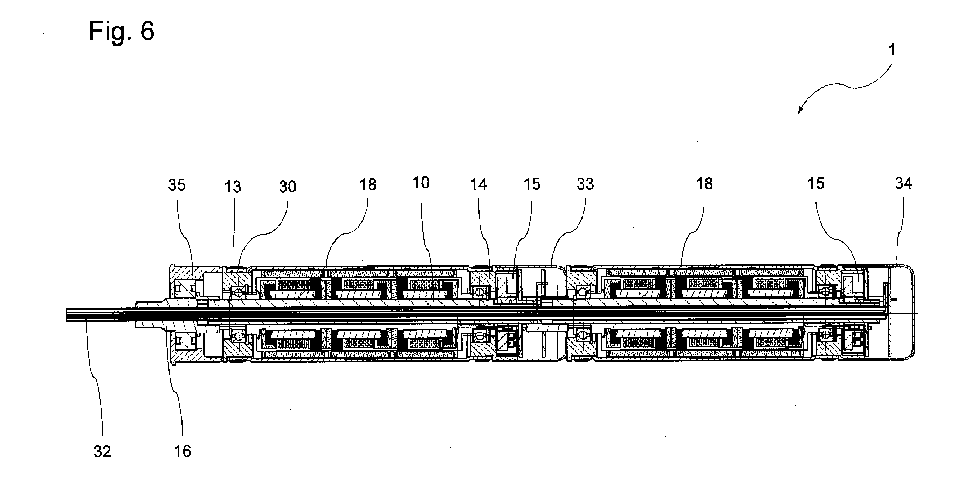

Figur 6 zeigt ein weiteres Ausführungsbeispiel des erfindungsgemässen Rollenantriebs. Bei diesem Beispiel sind zwei unabhängige Transversalflussmotoren auf einer gemeinsamen Statorachse 10 angeordnet. Dabei hat jeder Transversalflussmotor, wie vorangehend insbesondere im Zusammenhang mit Figur 2 beschrieben, ein Mantelrohr 18 mit zwei darauf angeordneten Toleranzringen 30. Ebenso hat jeder Transversalflussmotor eine Steuereinheit 15. Letztere sind jeweils durch eine Abdeckhülse 33, 34 geschützt, wobei im Beispiel die Abdeckhülse 33 eine Durchgangsöffnung für die Statorachse 10 aufweist, wogegen die Abdeckhülse 34 stirnseitig geschlossen ist. Links in der Figur ist ein sogenannter Rollenboden 35 erkennbar, der dazu bestimmt ist, in das Ende einer Rolle 2 (in Figur 6 nicht dargestellt) gesteckt zu werden. Der Rollenboden 35 ist über Lager auf der Kupplungsachse 16 abgestützt. Ein Kabel 32 mit mehreren Adern für die Speisung und Steuerung der Transversalflussmotoren ragt links aus der Kupplungsachse 16 heraus. Diese Ausführungsart der Erfindung erlaubt es, eine Rolle 2, beispielsweise für einen Rollenförderer, zu unterteilen, sodass zwei oder mehr Abschnitte der Rolle unabhängig voneinander durch jeweils einen Transversalflussmotor antreibbar sind. Durch unterschiedliche Drehzahlen, Drehmomente oder Drehrichtungen der einzelnen Abschnitte können so beispielsweise auf einem Rollenförderer transportierte Güter um eine vertikale Achse gedreht werden.

Für alle Ausführungsarten der Erfindung gilt, dass der Rollenantrieb nicht nur zum Antreiben, sondern auch zum Bremsen von Rollen verwendet werden kann. Dabei ist sogar ein Rekuperationsbetrieb möglich, bei dem der Transversalflussmotor als Generator wirkt.

### Bezugszeichenliste

- 1: Rollenantrieb
- 2: Rolle
- 3: Längsachse
- 4: Stator-Poleinheit
- 5: Zahnscheibe
- 6: Flussrohr
- 7: Spule
- 8: Rotor-Poleinheit
- 9: Permanentmagnet
- 10: Statorachse
- 11: Wälzlager
- 12: Wälzlager
- 13: Lagerübergangsring
- 14: Lagerübergangsring
- 15: Steuereinheit
- 16: Kupplungsachse
- 17: Einpresshülse
- 18: Mantelrohr
- 19: Schraube
- 20: Schraube
- 21: Kupplung
- 22: Abschlussdeckel
- 23: Wälzlager
- 24: Anschlussleiter
- 25: Leiter
- 26: Bohrung
- 27: Längsnut
- 28: Steckkontakt
- 29: Steckkupplung
- 30: Toleranzring
- 31: Spannring
- 32: Kabel
- 33: Abdeckhülse
- 34: Abdeckhülse
- 35: Rollenboden
- 36:
- 37:
- 38:
- 39:
- 40:

## Patentansprüche

1. Getriebeloser Rollenantrieb (1), der dazu bestimmt ist, in eine hohlzylindrische Rolle (2) eingebaut zu werden, um diese drehend anzutreiben, **dadurch gekennzeichnet, dass** der Rollenantrieb einen Transversalflussmotor mit einem innenliegenden Stator mit einer Statorachse (10) und einem aussenliegenden Rotor (8, 18) mit in Umfangsrichtung hintereinander angeordneten Permanentmagneten (9) umfasst, dass der Rollenantrieb eine elektrische Steuereinheit (15) umfasst und dass der Transversalflussmotor und die Steuereinheit (15) axial hintereinander angeordnet sind.

2. Rollenantrieb (1) nach Anspruch 1, **dadurch gekennzeichnet, dass** die Abmessungen der Steuereinheit (15) radial zur Statorachse (10) den Rotordurchmesser nicht übersteigen.

3. Rollenantrieb (1) nach Anspruch 1, **dadurch gekennzeichnet, dass** die Steuereinheit (15) derart ausgebildet ist, dass sie als Abschlusselement in eine hohlzylindrische Rolle (2) einsetzbar ist.

4. Rollenantrieb (1) nach einem der vorangehenden Ansprüche, **dadurch gekennzeichnet, dass** die Steuereinheit (15) eine axiale Öffnung aufweist, in welche die Statorachse (10) hineinragt.

5. Rollenantrieb (1) nach einem der vorangehenden Ansprüche, **dadurch gekennzeichnet, dass** die Statorachse (10) die Steuereinheit (15) durchdringt.

6. Rollenantrieb (1) nach einem der vorangehenden Ansprüche, **dadurch gekennzeichnet, dass** die Steuereinheit (15) mit mindestens einem in einer zentralen Bohrung der Statorachse (1) verlaufenden elektrischen Leiter (25) verbunden ist.

7. Rollenantrieb (1) nach einem der vorangehenden Ansprüche, **dadurch gekennzeichnet, dass** die Steuereinheit (15) mit mindestens einem in einer Längsnut (27) der Statorachse (10) verlaufenden elektrischen Anschlussleiter (24) mindestens einer Statorspule (7) verbunden ist.

8. Rollenantrieb (1) nach Anspruch 7, **dadurch gekennzeichnet, dass** der elektrische Anschlussleiter (24) über eine Steckverbindung (28, 29) mit der Steuereinheit (15) verbunden ist.

9. Rollenantrieb (1) nach einem der vorangehenden Ansprüche, **dadurch gekennzeichnet, dass** der Stator und der Rotor zwei oder mehr axial hintereinander angeordnete Poleinheiten (4, 8) aufweisen.

10. Rollenantrieb (1) nach einem der vorangehenden Ansprüche, **dadurch gekennzeichnet, dass** aussen auf dem Rotor (8, 18) mindestens ein radial federnder Toleranzring (39) zur kraftschlüssigen Verbindung mit einer den Rotor (8, 18) umgebenden hohlzylindrischen Rolle (2) angeordnet ist.

11. Rollenantrieb (1) nach einem der vorangehenden Ansprüche, **dadurch gekennzeichnet, dass** er mindestens ein Passstück (17, 35) für den stirnseitigen Abschluss einer hohlzylindrischen Rolle (2) aufweist.

12. Rollenantrieb (1) nach Anspruch 11, **dadurch gekennzeichnet, dass** das Passstück (17) mit Dichtmitteln, vorzugsweise Labyrinth-Dichtmitteln (22) ausgestattet ist.

13. Rollenantrieb (1) nach einem der vorangehenden Ansprüche, **dadurch gekennzeichnet, dass** auf einer einzigen Statorachse (10) oder koaxial miteinander verbundenen Statorachsen (10) mindestens zwei Transversalflussmotoren hintereinander angeordnet sind.
